(19) Europäisches Patentamt
European Patent Office
Office européen des brevets

(11) **EP 2 409 887 A2**

(12) **EUROPÄISCHE PATENTANMELDUNG**

(43) Veröffentlichungstag:
**25.01.2012 Patentblatt 2012/04**

(51) Int Cl.:
***B60T 8/1755*** *(2006.01)*

(21) Anmeldenummer: **11174176.5**

(22) Anmeldetag: **15.07.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **19.07.2010 DE 102010031531**

(71) Anmelder: **Noell Mobile Systems GmbH**
**97080 Würzburg (DE)**

(72) Erfinder:
• **Bauer, Reinhard**
  **97280 Remlingen (DE)**
• **Müller, Conrad**
  **97299 Zell am Main (DE)**

(74) Vertreter: **Rau, Schneck & Hübner**
**Patentanwälte - Rechtsanwälte**
**Königstraße 2**
**90402 Nürnberg (DE)**

(54) **Verfahren und System zur Regelung eines Fahrverhaltens eines Flurförderzeugs**

(57) Ein Verfahren zur Regelung eines Fahrverhaltens eines Flurförderzeugs, insbesondere eines Portalstaplers oder einer anderen mobilen Arbeitsmaschine mit einem ungünstigen Verhältnis von Schwerpunktlage und Spurweite, durch Vermeidung von Schwingungen des Flurförderzeugs, umfasst die Verfahrensschritte Ermitteln einer Fahrgeschwindigkeit (v) des Flurförderzeugs (1) mit mindestens einem Fahrgeschwindigkeitssensor (13), Ermitteln einer Bahnkrümmung ($\rho$) einer Bahn, entlang der das Flurförderzeug (1) fährt, mit mindestens einem Bahnkrümmungssensor, Ermitteln eines Gewichts ($G_L$) einer von dem Flurförderzeug (1) angehobenen Last (2) mit mindestens einem Gewichtssensor (15), Ermitteln einer Hubhöhe (H) der Last (2) mit mindestens einem Hubhöhensensor (16), Berechnen eines Lastzustands ($\omega$) des Flurförderzeugs (1) in Abhängigkeit des Gewichts ($G_L$) und der Hubhöhe (H) mit einer Lastzustandsberechnungseinheit (29), Ermitteln einer Bezugsmasse ($m_B$) des Flurförderzeugs (1) in Abhängigkeit Gewichts ($G_L$), Berechnen eines zulässigen Toleranzbereichs für die Bahnkrümmung ($\rho$) und/oder deren zeitliche Änderung (dp/dt) sowie für die Fahrgeschwindigkeit (v) und/oder deren zeitliche Änderung (dv/dt) in Abhängigkeit des Lastzustands ($\omega$) und der Bezugsmasse ($m_B$) mit einer Toleranzbereichsberechnungseinheit (17), Überwachen der Bahnkrümmung ($\rho$) und/oder deren zeitlicher Änderung (da/dt) sowie der Fahrgeschwindigkeit (v) und/oder deren zeitlicher Änderung (dv/dt) mit einer Überwachungseinheit (31) und Sicherstellen mit einer Steuereinheit (32), dass die Bahnkrümmung ($\rho$) und/oder deren zeitliche Änderung (da/dt) sowie die Fahrgeschwindigkeit (v) und/oder deren zeitliche Änderung (dv/dt) sich innerhalb des zulässigen Toleranzbereichs befinden.

Fig. 1

**Beschreibung**

Die Erfindung betrifft ein Verfahren sowie ein System zur Regelung des Fahrverhaltens eines Flurförderzeugs, insbesondere eines Portalstapler oder einer anderen mobilen Arbeitsmaschine mit einem ungünstigen Verhältnis von Schwerpunktlage und Spurweite.

Flurförderzeuge und insbesondere die im englischen Sprachraum als straddle carrier bezeichneten Portalstapler, die weltweit in Seehäfen und Containerterminals zum Transportieren und Stapeln von Frachtcontainern eingesetzt werden, sind durch offenkundige Vorbenutzung bekannt. Portalstapler eignen sich zum Überfahren der Container und weisen entsprechend einen portalförmigen Aufbau auf. Um mit dem Portalstapler mehrere Container übereinander stapeln zu können, ist die Höhe des Portals im Allgemeinen um ein vielfaches größer als die Breite des Portals, sodass grundsätzlich die Gefahr des Umkippens des Staplers beim Verlagern eines Containers gegeben ist. Die Voraussetzung dafür, dass ein Kippen auftreten kann, ist ein Verlassen eines statisch standsicheren Zustands des Flurförderzeugs. Ein statisch standsicherer Zustand ist erreicht, wenn ein bei einem stationären, also gleichbleibendem Fahrzustand des Flurförderzeugs auf dieses wirkendes Standmoment größer ist als ein entsprechendes Kippmoment. Das Standmoment des Flurförderzeugs ergibt sich aus dem Gesamtgewicht, d. h. einer Summe aus Leergewicht und gehobener Last (Nutzlast), multipliziert mit einem effektiven, horizontalen Hebelarm von einem Staplerschwerpunkt, in dem das Gesamtgewicht angreift, zu einer Kippkante. Die Kippkante ist eine gedachte Linie auf einem Boden, um die der Stapler kippt, wobei die Linie einerseits senkrecht zu einem Summenvektor der Kippkräfte und andererseits senkrecht zu einer Ebene, in welcher der Stapler beim Kippen dreht, angeordnet ist. Unter dem Kippmoment versteht man die Summe aller auf die Teile des Flurförderzeugs und die Nutzlast wirkenden Massekräfte multipliziert mit deren vertikalen Abständen der Angriffspunkte zu einer Kippkante des Flurförderzeugs. Bei einer Kurvenfahrt des Staplers wird die Richtung der Fahrgeschwindigkeit verändert, sodass ein Neigen in einer Querrichtung, d. h. um die Längsachse des Staplers erfolgen kann. Ein derartiges Neigen um die Längsachse wird auch als Wanken bezeichnet. Entsprechend kann ein Bremsen oder Beschleunigen, d. h. eine zeitliche Änderung der Fahrgeschwindigkeit, zu einem Neigen in Längsrichtung, also um eine Querachse des Flurförderzeugs, führen. Ein Neigen um die Querachse wird auch als Nicken bezeichnet. Durch das Neigen wird die Kippgefahr weiterhin dadurch erhöht, dass bei einem angehobenen Container der Gesamtschwerpunkt des Portalstaplers nach oben verlagert ist. Aus der WO 2002/051680 A1 sind ein Verfahren und eine Vorrichtung zum Stabilisieren eines Fahrzeugs durch Vergleichen Ist- und Soll-Größen bekannt. Durch auf den Portalstapler in Folge einer Fahrgeschwindigkeitsänderung oder einer Lenkwinkeländerung wirkende Beschleunigungskräfte kann das Tragwerk des Portalstaplers zum Schwingen angeregt werden. Dies kann bei einer nach statischen Gleichgewichtsbedingungen gegebener Standsicherheit zu einer Erhöhung der Kippgefahr oder gar zum Kippen des Portalstaplers führen. In Verbindung mit weiteren, nicht vom Portalstapler beeinflussbaren Faktoren wie Seitenwind, exzentrisch beladene Container, Fahrbahnneigung bzw. Unebenheiten der Fahrbahn ergibt sich ein Gefahrenpotential, aufgrund dessen durchschnittlich etwa ein Kippunfall pro Jahr erfolgt und bei einem Bediener schwere bis tödliche Verletzungen verursachen kann.

Es ist die Aufgabe der vorliegenden Erfindung, ein Verfahren zur Regelung des Lenkverhaltens eines Staplers, insbesondere eines Portalstaplers, dahingehend zu verbessern, dass die Kippgefahr des Staplers reduziert ist. Diese Aufgabe ist erfindungsgemäß gelöst durch ein Verfahren mit dem in Anspruch 1 angegebenen Merkmalen.

Erfindungsgemäß wurde erkannt, dass ein Verfahren zur Regelung eines Fahrverhaltens eines Flurförderzeugs, insbesondere eines Portalstaplers oder einer anderen mobilen Arbeitsmaschine mit einem ungünstigen Verhältnis von Schwerpunktlage und Spurweite, geeignet ist, schwingungserzeugende Bewegungen zu vermeiden. Das Verhältnis von Schwerpunktlage und Spurweite ist umso ungünstiger, je höher die Schwerpunktlage und je kleiner die Spurweite sind. Zur Vermeidung schwingungserzeugender Bewegungen erfolgt das Ermitteln einer Fahrgeschwindigkeit des Flurförderzeugs mit mindestens einem Fahrgeschwindigkeitssensor, einer Bahnkrümmung, entlang der das Flurförderzeug fährt, mit mindestens einem Bahnkrümmungssensor, eines Gewichts einer von dem Flurförderzeug angehobenen Last, beispielsweise in Form eines Containers, mit mindestens einem Gewichtssensor und einer Hubhöhe der Last mit mindestens einem Hubhöhensensor. Alternativ kann die Fahrgeschwindigkeit beispielsweise auch aus einer gemessenen Drehzahl eines Fahrmotors schnell und eineindeutig ermittelt werden. Zusätzliche Sensoren muss das Flurförderzeug, um das Fahrverhalten erfindungsgemäß zu regeln, nicht aufweisen. Derartige zusätzliche Sensoren können aber je nach Ausgestaltung des Flurförderzeugs zum Einsatz kommen. Mit einer Lenkzustandsberechnungseinheit, die bei der Durchführung des erfindungsgemäßen Verfahrens zum Einsatz kommen kann, die aber nicht zwingend zum Einsatz kommen muss, werden ein Lenkzustand und/oder eine zeitliche Änderung des Lenkzustands des Flurförderzeugs in Abhängigkeit der Fahrgeschwindigkeit und der Bahnkrümmung berechnet. Der Lenkzustand bezeichnet dabei den momentanen Zustand des Flurförderzeugs, beschrieben durch die Momentanwerte von Fahrgeschwindigkeit und Bahnkrümmung. Als Maß für den Lenkzustand wird in der Querrichtung, also quer zur Fahrtrichtung des Flurförderzeugs, eine Zentrifugalbeschleunigung des Flurförderzeugs (Produkt aus der quadrierten Geschwindigkeit mit der Bahnkrümmung) und in der Längsrichtung, also in Fahrtrichtung des Flurförderzeugs, eine Beschleunigung als Änderung des Betrages des Geschwindigkeitsvektors einer Fahrgeschwindigkeit des Flurförderzeugs vorgegeben. Soweit nachfolgend der Begriff "Lenkzustand" verwendet wird, ist hiermit eine Lenkzustandsgröße in Einheiten der Beschleunigung gemeint. Unter dem zulässigen Lenkzustand wird allgemein ein zulässiger, statisch standsicherer Zustand des Flurförderzeugs verstanden, der durch die Fahrgeschwindigkeit und die Bahnkrümmung, entlang der das Flurförderzeug fährt, beschrieben ist. Als Maß zur quantitativen Beurteilung des Lenkzustands kann die Zentrifugalbeschleunigung auf das Flurförderzeug verwendet werden. Mit einer Lastzustandsberechnungseinheit erfolgt das Berechnen eines Lastzustands des Flurförderzeugs in Abhängigkeit des Gewichts und der Hubhöhe der Last. Der Lastzustand kann also durch die Momentanwerte von Nutzlast und Hubhöhe beschrieben werden. Weiterhin wird in Abhängigkeit des Gewichts der Last eine Bezugsmasse des Flurförderzeugs ermittelt, das beispielsweise die Summe aus einem bekannten Leergewicht des Flurförderzeugs und dem Gewicht der Last sein kann. Es ist auch möglich, dass die Bezugmasse nur das Gewicht der Last oder die Summe aus dem Gewicht der Last und dem Gewicht einer oder mehrerer Baugruppen des Flurförderzeugs umfasst. In Abhängigkeit des Lastzustandes und der Bezugsmasse des Flurförderzeugs wird mit einer Toleranzbereichsberechnungseinheit ein zulässiger Toleranzbereich für die Bahnkrümmung und/oder deren zeitliche Änderung sowie für die Fahrgeschwindigkeit und/oder deren zeitliche Änderung berechnet. Dabei dienen der Toleranzbereich für die Bahnkrümmung und/oder deren zeitliche Änderung der Verhinderung eines Schwingens in der Querrichtung, d.h. des Wankens um die Längsachse des Flurförderzeugs. Dadurch wird also die Kippgefahr aus einer y-z-Ebene des Flurförderzeugs reduziert. Die Bahnkrümmung steht hier stellvertretend für jegliche Messgröße, mit der ein Lenk- bzw. Kurvenzustand des Flurförderzeugs erfasst werden kann. Auch ein Toleranzbereich für den Lenkzustand oder ein Toleranzbereich für einen Lenkwinkel kann alternativ zu einem Toleranzbereich für die Bahnkrümmung vorgegeben werden. Entsprechend dienen die Fahrgeschwindigkeit und/oder deren zeitliche Änderung zur Verhinderung eines Schwingens in der Längsrichtung, d.h. des Nickens um die Querachse des Flurförderzeugs. Dementsprechend wird die Kippgefahr aus einer x-z-Ebene des Flurförderzeugs vermindert. Ein Überwachen der Bahnkrümmung und/oder deren zeitlicher Änderung sowie der Fahrgeschwindigkeit und/oder deren zeitliche Änderung erfolgt mit einer Überwachungseinheit. Mit einer Steuereinheit erfolgt ein Sicherstellen, dass die Bahnkrümmung und/oder deren zeitliche Änderung sowie die Fahrgeschwindigkeit und/oder deren zeitliche Änderung sich innerhalb des zulässigen Toleranzbereichs befinden. Das bedeutet, dass bei einer beispielsweise unbedachten Aktion eines Fahrers, die eine Veränderung der Bahnkrümmung und/oder deren zeitlicher Änderung sowie der Fahrgeschwindigkeit und/oder deren zeitlicher Änderung derart bewirkt, dass die die Bahnkrümmung beschreibenden, überwachten Kenngrößen aktiv begrenzt werden, falls sie den zulässigen Toleranzbereich verlassen würden. Der Fahrer kann also nicht eine beliebige Bahnkrümmung z.B. in Form eines beliebigen Lenkwinkels oder einer besonders schnellen Lenkwinkeländerung wählen. Bei Erreichen eines maximal zulässigen Wertes für die Bahnkrümmung oder deren zeitliche Änderung wird diese begrenzt. Beim erfindungsgemäßen Regelverfahren kann primär die zeitliche Änderung der Bahnkrümmung begrenzt sein, wobei bei Erreichen einer Grenze des Toleranzbereichs für die zulässige Bahnkrümmung deren zulässige Änderung gleich Null ist, so dass sich die Bahnkrümmung selbst nicht mehr ändert. Auf diese Weise kann durch Begrenzung der zeitlichen Änderung der Bahnkrümmung auch die Bahnkrümmung selbst begrenzt werden. Entsprechend werden die weiteren Kenngrößen wie Fahrgeschwindigkeit und/oder zeitliche Änderung der Fahrgeschwindigkeit überwacht und die Einhaltung des zulässigen Toleranzbereichs sichergestellt. Das bedeutet aber auch, dass ein Eingriff der Steuereinheit in den Fahrbetrieb des Flurförderzeugs nur erfolgt, falls er erforderlich ist, d.h. falls die genannten Kenngrößen an die Grenzen, insbesondere an eine obere Schranke, des zulässigen Toleranzbereichs stoßen. Solange die Kenngrößen sich innerhalb des zulässigen Toleranzbereichs befinden, erfolgt kein Eingriff der Steuereinheit. Gemäß dem vorliegenden Verfahren wird eine unzulässige Abweichung der Ist-Werte von den zulässigen Soll-Werten von vornherein verhindert. Beispielsweise kann bei Staplerfahrten auf ebenem Boden aber auch bei geneigten Fahrbahnen, unsymmetrisch beladenen Containern oder schlechten, unregelmäßigen Fahrbahnverhältnissen durch Wellen und/oder Schlaglöcher, der Fahrzustand und/oder dessen zeitliche Änderung überwacht werden. Bei kritischen Beschleunigungs- oder Abbremsvorgängen wird entsprechend vorrangig die Fahrgeschwindigkeit und/oder deren zeitliche Änderung überwacht werden. Selbstverständlich ist es möglich, bei sämtlichen Bewegungen des Flurförderzeugs sowohl die Bahnkrümmung als auch die Fahrgeschwindigkeit sowie jeweils die zeitlichen Änderungen davon zu überwachen. Somit ist die Regelung eines sicheren Fahrverhaltens des Flurförderzeugs gewährleistet. Insbesondere kann ein Fahrfehler, d. h. ein Erreichen eines maximal zulässigen Lenkwinkels oder einer maximal zulässigen Lenkwinkeländerung pro Zeiteinheit beispielsweise durch Übersteuern des Fahrers, verhindert und somit die Kippgefahr des Flurförderzeugs reduziert werden. Das erfindungsgemäße Verfahren kann das Berechnen eines Lenkzustandes und/oder einer zeitlichen Änderung des Lenkzustandes des Flurförderzeugs in Abhängigkeit von der Fahrgeschwindigkeit und von der Bahnkrümmung, durchgeführt mit einer Lenkzustandsberechnungseinheit, beinhalten.

Mit einem Verfahren nach Anspruch 2 wird das Ermitteln der Bahnkrümmung vereinfacht, da Lenkwinkelsensoren an einem Flurförderzeug und insbesondere an einem Portalstapler meist vorhanden sind, sodass für die Durchführung des Verfahrens keine zusätzlichen Sensoren nachgerüstet werden müssen. Mittels des mindestens einen Lenkwinkelsensors werden ein Lenkwinkel und/oder dessen zeitliche Änderung ermittelt. Es ist auch möglich, dass die zeitliche Änderung des Lenkwinkels aus dem gemessenen Lenkwinkel mit einer separaten Berechnungseinheit erfolgt. Für die Bestimmung der Bahnkrümmung kann beispielsweise angenommen werden, dass der Lenkwinkel etwa gleich oder proportional zur Bahnkrümmung ist oder dem Arcustangens der Bahnkrümmung ist. Das bedeutet, dass die Bahnkrümmung durch das Ermitteln des Lenkwinkels mittelbar bestimmbar ist.

Ein Verfahren nach Anspruch 3 dient einer weiteren Erhöhung der Sicherheit des Staplers gegen Kippen um die Längsachse und/oder um die Querachse. Über diese weiteren, einer Messung prinzipiell zugänglichen Kennwerte kann eine Beeinflussung des vorgegebenen Toleranzbereichs bzw. der vorgegebenen Toleranzbereiche bzw. Toleranzgrenzen erfolgen. Beispielsweise kann abhängig von einem gemessenen Einfederungszustand eine Toleranzgrenze noch weiter herabgesetzt werden.

Ein Verfahren nach Anspruch 4 gewährleistet ein sicheres Fahrverhalten des Flurförderzeugs bei einer notwendigen, aktiven Anpassung von Bahnkrümmung, Fahrgeschwindigkeit und/oder deren zeitlicher Änderungen mit der Steuereinheit, indem ein Schwingen des Flurförderzeugs verhindert wird. Das Fahrverhalten und eine möglicherweise auftretende Schwingung des Flurförderzeugs können mit einem Modell eines Einmasseschwingers in guter Näherung abgebildet werden. Zur Darstellung dieses Modells werden die Bezugsmasse des Flurförderzeugs und eine den Lastzustand charakterisierende Einmasseschwinger-Eigenkreisfrequenz des Tragwerks des Flurförderzeugs als Kennwerte verwendet, wobei die Eigenkreisfrequenz als charakteristischer Kennwert des Tragwerks bestimmt wird. Das Tragwerk umfasst beispielsweise Fahrträger, Räder, Maschinenbühne, Stützen, Greifer und Fahrkabine des Flurförderzeugs sowie die Nutzlast in Form des Containers. Bei einer alternativen Auslegung des Flurförderzeugs kann das Tragwerk zusätzliche oder auch weniger als die genannten Komponenten aufweisen. In die Modellierung können noch weitere Größen einfließen, beispielsweise eine Hubhöhe der Last oder eine Fahrgeschwindigkeit des Flurförderzeuges.

Ein Verfahren nach Anspruch 5 ermöglicht eine direkte und effektive Verhinderung einer Schwingungserregung des Flurförderzeugs.

Ein Verfahren nach Anspruch 6 ermöglicht eine direkte und schnelle Berechnung einer oberen Schranke des zulässigen Toleranzbereichs in Form einer maximal zulässigen zeitlichen Änderung des Lenkzustands. Dadurch wird gewährleistet, dass ein sich verändernder Toleranzbereich schnell aktualisiert werden kann. Dies ist eine wichtige Voraussetzung für ein verzögerungsfreies Funktionieren der Regelung des Fahrzustands. Dadurch wird die Sicherheit gegen Kippen des Flurförderzeugs zusätzlich erhöht. Die Schwingungsdauer, die bei dieser Ausführung des Verfahrens zum Einsatz kommt, ist die Schwingungsdauer einer Schwingung mit der Eigenkreisfrequenz.

Es ist eine weitere Aufgabe der vorliegenden Erfindung, ein System zur Regelung des Fahrverhaltens eines Flurförderzeugs, insbesondere eines Portalstaplers oder einer anderen mobilen Arbeitsmaschine mit einem ungünstigen Verhältnis von Schwerpunktlage zu Spurweite, dahingehend zu verbessern, dass die Kippgefahr des Flurförderzeugs reduziert ist.

Diese Aufgabe ist erfindungsgemäß gelöst durch ein System mit den im Anspruch 7 angegebenen Merkmalen.

Erfindungsgemäß wurde erkannt, dass mit einem System zur Regelung eines Fahrverhaltens eines Flurförderzeugs, insbesondere eines Portalstaplers oder einer anderen mobilen Arbeitsmaschine mit einem ungünstigen Verhältnis von Schwerpunktlage zu Spurweite, durch Vermeidung von Schwingungen des Flurförderzeugs sichergestellt ist, dass überwachte, das Fahrverhalten des Flurförderzeugs charakterisierende Größen sich innerhalb eines vorgegebenen, zulässigen Toleranzbereichs befinden. Bei den genannten Größen handelt es sich um die Bahnkrümmung und/oder deren zeitliche Änderung sowie die Fahrgeschwindigkeit und/oder deren zeitliche Änderung. Auch der vorstehend schon definierte Lenkzustand und/oder deren zeitliche Änderung kann als das Fahrverhalten des Flurförderzeugs charakterisierende Größe herangezogen werden. Dadurch kann vermieden werden, dass in Folge eines Fahrfehlers des Fahrers das Flurförderzeug zu schwingungserzeugenden Bewegungen veranlasst wird. Das erfindungsgemäße System umfasst mindestens einen Fahrgeschwindigkeitssensor zum Ermitteln der Fahrgeschwindigkeit des Flurförderzeugs, mindestens einen Bahnkrümmungssensor zum Ermitteln einer Bahnkrümmung, entlang der das Flurförderzeug fährt, mindestens einen Gewichtssensor und mindestens einen Hubhöhensensor zur Ermittlung eines Gewichts und einer Hubhöhe einer von dem Flurförderzeug gehobenen Last. Ferner kann eine Lenkzustandsberechnungseinheit zum Berechnen eines Lenkzustandes und/oder einer zeitlichen Änderung des Lenkzustandes des Flurförderzeugs in Abhängigkeit der Fahrgeschwindigkeit und der Bahnkrümmung sowie eine Lastzustandsberechnungseinheit zum Berechnen eines Lastzustandes des Flurförderzeugs in Abhängigkeit des Gewichts und der Hubhöhe vorgesehen sein. Eine Toleranzberechnungseinheit dient zum Berechnen eines zulässigen Toleranzbereichs für die Bahnkrümmung und/oder deren zeitliche Änderung sowie für die Fahrgeschwindigkeit und/oder deren zeitliche Änderung in Abhängigkeit des Lastzustandes und einer in Abhängigkeit des Gewichts der Last ermittelten Bezugsmasse des Flurförderzeugs. Mit einer Überwachungseinheit wird die Bahnkrümmung und/oder deren zeitliche Änderung sowie die Fahrgeschwindigkeit und/oder deren zeitliche Änderung überwacht, wobei eine Steuereinheit sicherstellt, dass die genannten Größen den zulässigen Toleranzbereich nicht verlassen. Der mindestens eine Fahrgeschwindigkeitssensor und der mindestens eine Bahnkrümmungssensor können zum Übermitteln der ermittelten Kennwerte mit der Lenkzustandsberechnungseinheit verbunden sein. Die ermittelten Kennwerte dienen als Eingangsdaten für die Toleranzbereichsberechnung. Entsprechend sind der mindestens eine Gewichtssensor und der mindestens eine Hubhöhensensor mit der Lastzustandsberechnungseinheit zum Übermitteln der ermittelten Kennwerte als Eingangsdaten für die Lastzustandsberechnung verbunden. Weiterhin ist die Lastzustandsberechnungseinheit mit der Toleranzberechnungseinheit verbunden, sodass die mit der Lastzustandsberechnungseinheit berechneten Kennwerte als Eingangsdaten zum Berechnen des zulässigen Toleranzbereichs übermittelt werden können. Der mit der Toleranzberechnungseinheit berechnete zulässige Toleranzbereich wird als Eingangsdatensatz für die Überwachung der entsprechenden Daten an die mit der Toleranzberechnungseinheit in Signalverbindung stehenden Überwachungseinheiten übermittelt. Entsprechend steht die Überwachungseinheit zum Sicherstellen des Einhaltens des zulässigen Toleranzbereichs mit der Steuereinheit in Signalverbindung. Die Vorteile entsprechen denen des erfindungsgemäßen Verfahrens nach Anspruch 1. Das erfindungsgemäße System kann eine Lenkzustandsberechnungseinheit zum Berechnen eines Lenkzustandes und/oder einer zeitlichen Änderung des Lenkzustandes des Flurförderzeugs in Abhängigkeit von der Fahrgeschwindigkeit und von der Bahnkrümmung aufweisen. Der mindestens eine Fahrgeschwindigkeitssensor und der mindestens eine Bahnkrümmungssensor können mit der optional vorgesehenen Lenkzustandsberechnungseinheit zum Übermitteln der entsprechenden Sensor- bzw. Kennwerte als Eingangsdaten für eine Lenkzustandsberechnung in Signalverbindung stehen.

Ein System nach Anspruch 8 vereinfacht die Bestimmung relevanter, für die Berechnung des zulässigen Toleranzbereichs notwendigen Größen.

Ein System nach Anspruch 9 ist kompakt und weist einen integrativen Aufbau auf.

Ein System mit einer Steuereinheit nach Anspruch 10 hat sich als besonders vorteilhaft erwiesen.

Ein Ausführungsbeispiel der Erfindung wird nachfolgend anhand der Zeichnung näher erläutert. In dieser zeigen:

Fig. 1    eine schematische Vorderansicht eines Portalstaplers mit einem erfindungsgemäßen System zur Regelung des Fahrverhaltens,

Fig. 2    eine Fig. 1 entsprechende Seitenansicht,

Fig. 3    eine Darstellung eines Lenkzustands als funktionelle Abhängigkeit der Zeit,

Fig. 4    eine Fig. 3 entsprechende Darstellung der ersten Ableitung des Lenkzustands nach der Zeit und

Fig. 5    eine schematische Darstellung eines Schaltplans zur Durchführung des erfindungsgemäßen Verfahrens.

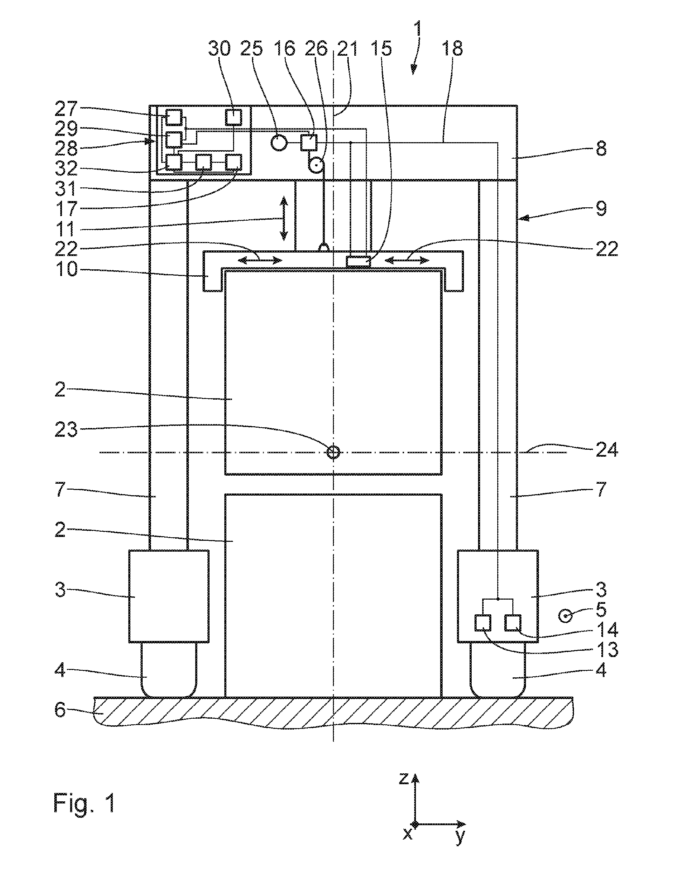

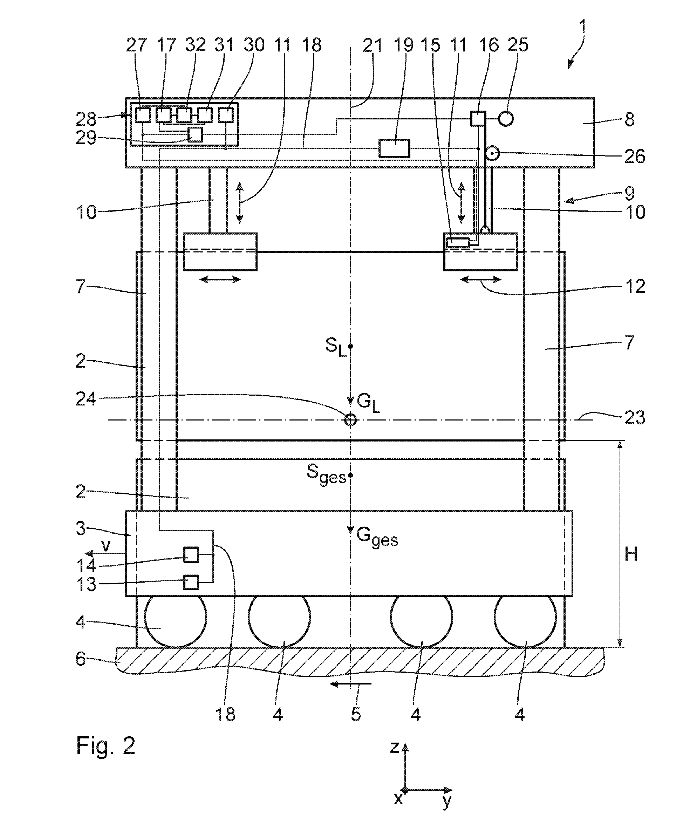

Ein in Fig. 1 und 2 rein schematisch dargestelltes Flurförderzeug in Form eines Portalstaplers 1 dient zum Transportieren und Stapeln von Lasten in Form von Containern 2. Der Stapler 1 weist zwei beabstandet und parallel zueinander angeordnete Fahrträger 3 auf, die jeweils mehrere Räder 4 zum Verfahren des Staplers 1 aufnehmen. Die Räder 4 sind unabhängig voneinander und können insbesondere jeweils einen eigenen Fahrantrieb aufweisen. Zur Verbesserung des Lenkverhaltens des Portalstaplers 1 ist die Lenkung der Räder 4 synchronisiert; dies kann beispielsweise in Form von Einachs-, Zweiachs- oder Mehrachslenkungen realisiert sein. Die Räder 4 eines Fahrträgers 3 sind durch diesen in Fahrtrichtung 5 vorgegeben und hintereinander angeordnet. Die Fahrtrichtung 5 entspricht auch der Längsrichtung des Staplers 1, zu der eine Längsachse 23 parallel angeordnet ist. Entsprechend ist eine Querachse 24 senkrecht zu der Längsachse 23 und damit auch zur Fahrtrichtung 5 orientiert und definiert die Querrichtung des Staplers 1. Die Achsen 23, 24 werden auch als x-Achse bzw. y-Achse eines kartesischen Koordinatensystems bezeichnet. Entsprechend ist die Ebene des Bodens 6, auf der der Stapler 1 verfährt, parallel zur x-y-Ebene orientiert.

Die Fahrträger 3 sind durch die Räder 4 gegenüber einem Boden 6 abgestützt und im Wesentlichen parallel zu dem Boden 6 angeordnet. Senkrecht von Fahrträgern 3 nach oben, d. h. von dem Boden 6 abgewandt, erstrecken sich jeweils zwei Stützen 7, die mit einer darüberliegenden, die Stützen 7 der beiden Fahrträger 3 miteinander verbindenden Maschinenbühne 8 ein Portal 9 bilden. Das Portal 9 ist derart gestaltet, dass der Portalstapler 1 mindestens einen und insbesondere drei oder vier aufeinander gestapelte Container 2 kollisionsfrei überfahren kann.

Der Portalstapler 1 weist eine zentrale Vertikalachse 21 oder auch z-Achse auf. Bezüglich der Vertikalachse 21 ist der Portalstapler 1 insbesondere bezüglich seiner Geometrie doppelt symmetrisch ausgeführt, d. h. der Portalstapler 1 ist gemäß der Vorderansicht in Fig. 1 und gemäß der Seitenansicht in Fig. 2 jeweils geometrisch achsensymmetrisch zu der Vertikalachse 21 gestaltet. Die Verteilung der Massen des Staplers 1 kann auch asymmetrisch bezüglich der Vertikalachse 21 erfolgen, so dass beispielsweise ein Gesamt-Schwerpunkt $S_{ges}$ des Portalstaplers 1 beabstandet zur Vertikalachse angeordnet sein kann. Entsprechend ist ein Neigen des Portalstaplers 1 aus der y-z-Ebene, d.h. ein Drehen um die Längsachse 23 möglich, indem sich der Stapler 1 bezüglich der Vertikalachse 21 über einen der beiden Fahrträger 3 zur Seite neigt. Eine derartige oszillierende Bewegung um die Längsachse 23 wird auch als Wanken bezeichnet. Es ist weiterhin möglich, dass der Portalstapler 1, insbesondere bei einer Bergauf- oder Bergabfahrt und/oder bei einem starken Brems- oder Beschleunigungsvorgang, um die Querachse 24 dreht und sich somit nach vorne oder nach hinten neigt. Eine derartige oszillierende Bewegung um die Querachse 24 wird auch als Nicken bezeichnet.

An der Maschinenbühne 8 sind zwei Greifer 10 vorgesehen, die vertikal beweglich mit der Maschinenbühne 8 verbunden sind und nach unten in das Portal 9 hineinragen. Die Greifer 10 sind zur Aufnahme des Containers 2 entsprechend ausgebildet. Dazu sind die Greifer 10 vorzugsweise als standardisierte, an sich bekannte Lastaufnahmemittel gestaltet, die in korrespondierende Haltemittel des Containers 2 eingreifen. Derartige Lastaufnahmemittel sind in der Praxis als Spreader mit Twistlocks bekannt. Beispielsweise können die Greifer 10 auch als teleskopierbare Zangen ausgeführt sein und entlang einer Öffnungs- bzw. Schließrichtung 22 zum Freigeben oder Greifen des Containers 2 auseinander- oder zusammengefahren werden. In einem derartigen Fall können die Greifer 10, wie durch die Doppelpfeile 11, 12 in den Figuren 1 und 2 dargestellt, jeweils höhenverstellbar (bei 11) und längsverstellbar (bei 12) entlang der Fahrtrichtung 5 ausgeführt sein. Wesentlich ist, dass der Container 2 schnell und sicher mit den Greifern 10 aufgenommen, verlagert und wieder abgestellt werden kann.

An jedem, nicht dargestelltem Fahrmotor eines angetriebenen Rads 4 ist ein Fahrgeschwindigkeitssensor 13 zur Ermittlung der Fahrgeschwindigkeit v des Portalstaplers 1 vorgesehen. Es ist auch möglich, weniger Fahrgeschwindigkeitssensoren 13, jedoch mindestens einen vorzusehen. Bei mehreren Sensoren werden beispielsweise die Fahrgeschwindigkeiten $v_i$ einzelner Räder 4 ermittelt und daraus einen Mittelwert der Fahrgeschwindigkeit $v_m$ des Portalstaplers 1 berechnet. In entsprechender Weise ist mindestens Bahnkrümmungssensor in Form eines Lenkwinkelsensors 14 in dem Fahrträger 3 vorgesehen, wobei der Lenkwinkelsensor 14 zur Ermittlung eines aktuellen Ist-Lenkwinkels $\alpha_{ist}$ der Räder 4 und/oder einer zeitlichen Änderung des Lenkwinkels $d\alpha_{ist}/dt$ dient. Entsprechend ist es möglich mehrere Lenkwinkelsensoren 14 vorzusehen und einen Mittelwert von Einzelmesswerten zu bestimmen. Es ist alternativ auch möglich, das Messsignal eines Lenkwinkelsensors als führendes Signal zu verwenden und mindestens ein weiteres Lenkwinkel-Messsignal zur Kontrolle des führenden Signals und/oder zur Filterung zu nutzen, falls das führende Signal ein Rauschen aufweist. Aus dem Lenkwinkel $\alpha$ kann eine Bahnkrümmung $\rho$ einer Bahn, entlang der der Stapler 1 fährt, bestimmt werden, wobei beispielsweise gilt: $\alpha \sim \rho$ oder $\alpha \sim \tan(\rho)$.

Der Greifer 10 ist über eine von einem Hubmotor 25 angetriebene Seilwinde 26 höhenverstellbar. Ein Gewichtssensor 15 zur Ermittlung des Gewichts $G_L$ des von dem Stapler 1 gehobenen Containers 2, also der Nutzlast, ist gemäß dem gezeigten Ausführungsbeispiel direkt an dem Greifer 10 angebracht. Es ist auch möglich, dass der Gewichtssensor 15 direkt an dem Portal 9 oder an einer anderen Stelle innerhalb eines aufgrund des Hebens des Containers 2 auftretenden Kraftflusses vorgesehen ist. Es können auch mehrere Gewichtssensoren 15 vorgesehen sein. Das Gewichts $G_L$ des Containers 2 greift im Schwerpunkt $S_L$ des Containers 2 an. Der Gewichtssensor 15 kann beispielsweise in Form eines Drehmomentsensors zur Ermittlung eines Drehmoments eines Hubmotors zum Heben des Containers 2 ausgeführt sein. Es ist auch denkbar, einen zum Heben des Containers 2 erforderlichen Hydraulikdruck in einem Hydraulikzylinder zu erfassen. Ein Hubhöhensensor 16 dient der Ermittlung der Hubhöhe H des Containers 2 und ist am Hubmotor 25 und an der Seilwinde 26 vorgesehen. Es ist auch möglich, mehr als einen Hubhöhensensor 16 einzusetzen.

Eine Massenberechnungseinheit 27 ist in einem Schaltschrank 28 auf der Maschinenbühne 8 oder an einer anderen Stelle untergebracht. Mit der Massenberechnungseinheit 27 erfolgt das Berechnen einer Bezugsmasse $m_B$ des Staplers 1 aus der Summe des Gewichts $G_L$ des Containers 2 und eines Leergewichts $G_0$ des unbeladenen Staplers 1. Gegebenenfalls können auch weitere Gewichte beispielsweise verursacht durch zusätzlich an den Stapler 1 montierte Komponenten Berücksichtigung finden. Es ist auch möglich, dass als Bezugsmasse $m_B$ ausschließlich das Gewicht $G_L$ der Last 2 verwendet wird oder zusätzlich Teilgewichte einer oder mehrerer Komponenten des Staplers 1 berücksichtigt werden. Die Bezugsmasse $m_B$ greift im Gesamt-Schwerpunkt $S_{ges}$ des Staplers 1 an. Entsprechend steht die Massenberechnungseinheit 27 mit dem Gewichtssensor 15 in Signalverbindung.

Auch eine Toleranzbereichsberechnungseinheit 17 zur Berechnung eines zulässigen Toleranzbereichs für die Bahnkrümmung $\rho$ und/oder deren zeitliche Änderung $d\rho/dt$ oder zur Berechnung eines zulässigen Toleranzbereichs für einen Lenkzustand a und/oder dessen zeitliche Änderung $da/dt$ sowie zur Berechnung eines zulässigen Toleranzbereichs für die Fahrgeschwindigkeit v und/oder deren zeitliche Änderung $dv/dt$ in Abhängigkeit von den ermittelten Größen ist in dem Schaltschrank 28 angeordnet. Als Maß für einen Lastzustand kann eine mit einer ersten Eigenfrequenz korrespondierende Kreisfrequenz $\omega$ eines Schwingungssystems bei Schwingungen in Längsrichtung oder in Querrichtung verwendet werden. Als Schwingungssystem gilt in diesem Zusammenhang das Tragwerk des Staplers 1 umfassend die Fahrträger 3, die Räder 4, die Maschinenbühne 8, die Stützen 7, die Greifer 10 und die nicht dargestellte Fahrkabine sowie der mit den Greifern 10 gehaltene Container 2. Das Schwingungssystem kann als Einmassenschwinger mit der Masse $m_B$ und der Kreisfrequenz ω, ggf. unter Einbeziehung weiterer, das Flurförderzeug 1 charakterisierender Größen, abgebildet werden.

Zur Ermittlung der Kreisfrequenz ω als die den Lastzustand charakterisierende Größe wird eine in dem Schaltschrank 28 angeordnete Lastzustandsberechnungseinheit 29 verwendet, die mit dem Gewichtssensor 15 und mit dem Hubhöhensensor 16 in Signalverbindung steht. Die Kreisfrequenz wird in Abhängigkeit der Hubhöhe H und des Gewichts $G_L$ ermittelt. Die Lastzustandsberechnungseinheit 29 steht zum Übermitteln der Kreisfrequenz ω mit der Toleranzberechnungseinheit 17 in Signalverbindung.

In dem Schaltschrank 28 ist weiterhin eine Lenkzustandsberechnungseinheit 30 zur Berechnung eines Lenkzustandes a und/oder einer zeitlichen Änderung des Lenkzustandes da/dt des Staplers 1 in Abhängigkeit der Fahrgeschwindigkeit v und der Bahnkrümmung ρ vorgesehen. Dazu ist die Lenkzustandsberechnungseinheit 30 mit dem Bahnkrümmungssensor und insbesondere mit dem Lenkwinkelsensor 14, und weiterhin mit dem Fahrgeschwindigkeitssensor 13 verbunden.

Weiterhin ist eine ebenfalls in dem Schaltschrank 28 angeordnete, mit der Toleranzberechnungseinheit 17 in Signalverbindung stehende Überwachungseinheit 31 vorgesehen, die zum Überwachen der Bahnkrümmung ρ und deren zeitlicher Änderung dp/dt oder des Lenkzustandes a und/oder dessen zeitlicher Änderung da/dt sowie der Fahrgeschwindigkeit v und/oder deren zeitliche Änderung dv/dt dient.

Soweit die Überwachungseinheit 31 die Bahnkrümmung ρ und die Fahrgeschwindigkeit v sowie deren zeitliche Ableitungen überwacht, kann auf eine zwischengeschaltete Lenkzustandsberechnung und in der Konsequenz auch auf die Lenkzustandsberechnungseinheit 30 verzichtet werden. Die Daten des Fahrgeschwindigkeitssensors 13 und des Lenkwinkelsensors 14 werden dann direkt an die Überwachungseinheit 31 übermittelt. Die Überwachungseinheit 31 ist zum Sicherstellen des Einhaltens des zulässigen Toleranzbereichs mit einer Steuereinheit 32 verbunden. Die Steuereinheit 32 ist ebenfalls in dem Schaltschrank 28 angeordnet. Ferner ist die Steuereinheit 32 mit den Berechnungseinheiten 17, 27, 29, 30 direkt verbunden. Es ist auch möglich, die Berechnungseinheiten 17, 27, 29, 30 zu einer einzigen Berechnungseinheit zusammenzufassen und insbesondere in die Steuereinheit 32 zu integrieren. Entsprechend kann auch die Massenberechnungseinheit 27 in der Lastzustandsberechnungseinheit 29 integriert sein. Sämtliche Signalverbindungen des Staplers 1 sind als Datenleitungen 18 ausgeführt. Es ist auch möglich, dass die Signalverbindungen drahtlos beispielsweise mittels Funk erfolgen.

Als Maß für den Lenkzustand kann eine infolge einer Kurvenfahrt auftretenden Querbeschleunigung a als eine Zentrifugalbeschleunigung verwendet werden. Die Zentrifugalbeschleunigung des in dem Schwingungssystem als Punktmasse modellierten Staplers 1 ergibt sich aus:

$$a = v^2 \cdot \rho.$$

Die Steuereinheit 32 weist einen PID-Regler auf. Dadurch wird eine besonders schnelle, effektive Regelung des Fahrzustands erreicht.

Darüber hinaus können weitere Sensoren vorgesehen sein, die beispielsweise die Einfederung mindestens eines Rades 4 des Portalstaplers 1, die Fahrbeschleunigung des Staplers 1, die Neigungswinkels des Staplers 1 gegenüber dem Boden 6 sowie die Antriebskraft eines Rades 4 zur weiteren Berücksichtigung für die Stabilisierung des Lenkzustands zur Verfügung stellen.

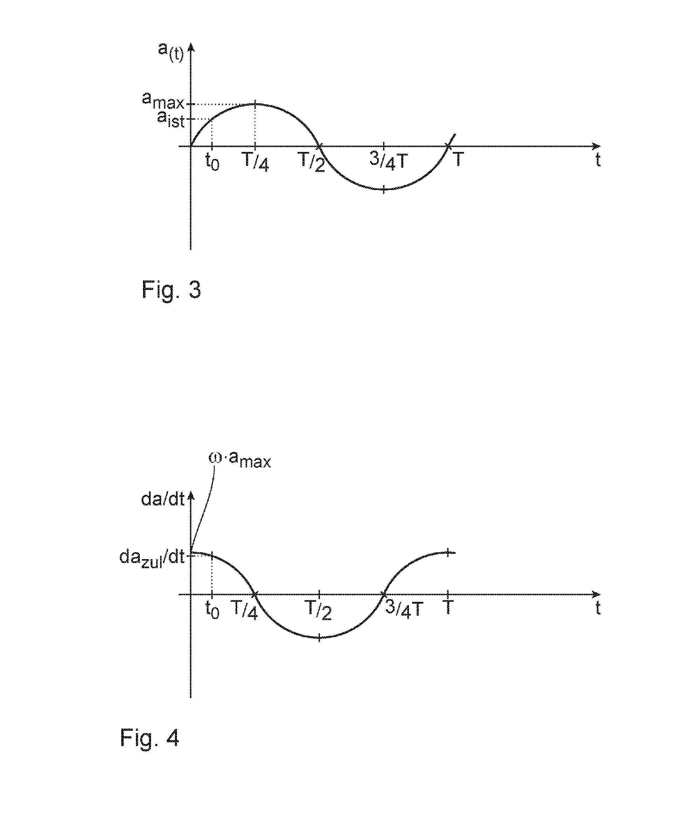

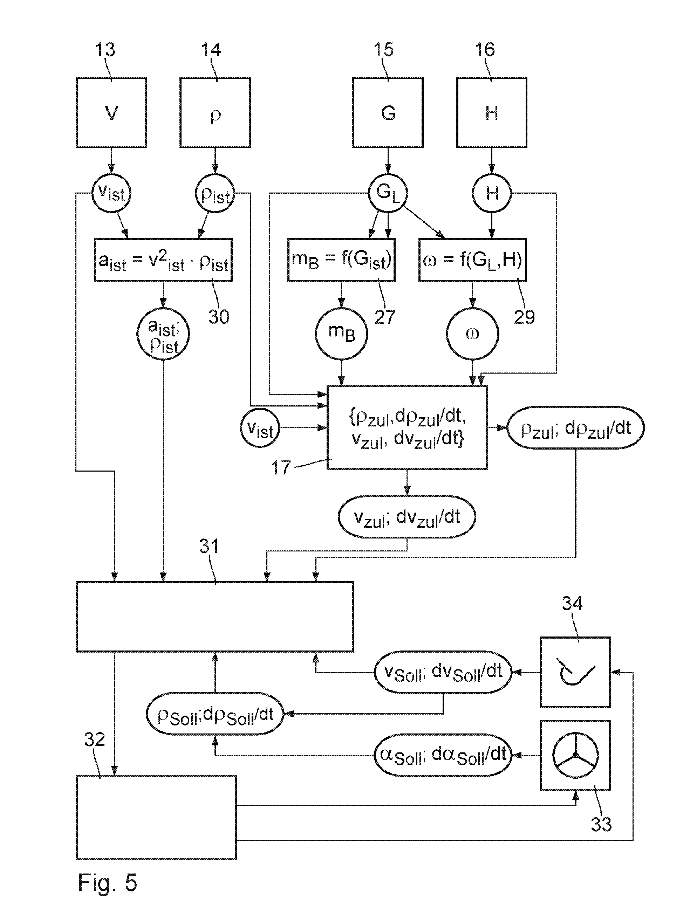

Im Folgenden wird ein Verfahren zur Regelung des Fahrverhaltens des Portalstaplers 1 am Beispiel einer Bewegung in der y-z-Ebene z.B. in Form einer Neigung um die Längsachse 23 anhand des in Fig. 5 schematisch dargestellten Schaltplans beschrieben. Zunächst werden die aktuelle Fahrgeschwindigkeit $v_{ist}$ des Staplers 1 mit dem Fahrgeschwindigkeitssensor 13 und die Bahnkrümmung $\rho_{ist}$ einer Bahn, entlang der der Stapler 1 fährt, mit dem Bahnkrümmungssensor in Form des Lenkwinkelsensors 14 ermittelt und an die Lenkzustandsberechnungseinheit 30 übermittelt. Die Ermittlung der Bahnkrümmung $\rho_{ist}$ erfolgt über den Lenkwinkel $\alpha_{ist}$, der proportional zur Bahnkrümmung $\rho_{ist}$ oder zu deren Arcustangens $\tan(\rho_{ist})$ ist. Mit der Lenkzustandsberechnungseinheit 30 erfolgt die Berechnung der den Lenkzustand charakterisierenden Zentrifugalbeschleunigung $a_{ist}$ und/oder deren zeitliche Änderung $da_{ist}/dt$. Weiterhin wird das Gewicht $G_L$ der von dem Stapler 1 gehobenen Last 2 mit dem Gewichtssensor 15 und die Hubhöhe H der Last 2 mit dem Hubhöhensensor 16 ermittelt und an die Lastzustandsberechnungseinheit 29 übermittelt. Dort erfolgt die Berechnung der den Lastzustand charakterisierenden Kreisfrequenz ω in Abhängigkeit des Gewichts $G_L$ und der Hubhöhe H. Die Kreisfrequenz ω beschreibt eine erste Eigenfrequenz des Tragwerks als Schwingungssystem, das zur Modellierung des Staplers 1 als Einmassenschwinger mit der Bezugsmasse $m_B$ und der Kreisfrequenz ω dient. Gemäß dieser Modellierung ist die Zentrifugalbeschleunigung a eine Funktion der Zeit a(t). Die Abhängigkeit von der Zeit t der Zentrifugalbeschleunigung a(t) ist durch eine symmetrische Sinuskurve ohne Phasenverschiebung in Fig. 3 schematisch dargestellt. Die maximale Amplitude $a_{max}$ der Zentrifugalbeschleunigung ist in Fig. 3 angegeben. Diese maximale Amplitude $a_{,max}$ entspricht einem statisch standsicheren Zustand, also einem Zustand, bei dem ein Quotient aus bei stationärer Bewegung auf den Portalstaplern wirkende Stand- und Kippmomenten größer ist als 1, so dass ein Kippen bei Vorliegen der maximalen Amplitude $a_{max}$ der Zentrifugalbeschleunigung sicher verhindert ist. Diese maximale Amplitude $a_{max}$ der Zentrifugalbeschleunigung kann als zulässige, sicherheitsbeiwertbehaftete Beschleunigung $a_{zul}$ für einen stationären Fahrzustand bzw. für ein statisches Gleichgewicht des Staplers 1 herangezogen werden.

Weiterhin wird mit der Massenberechnungseinheit 27 die für die Modellierung erforderliche Bezugsmasse $m_B$ des Staplers 1 in Abhängigkeit des Gewichts $G_L$ des Containers 2 ermittelt. Die Toleranzberechnungseinheit 17 berechnet nun die Toleranzbereiche einerseits für die Bahnkrümmung $\rho_{zul} = a_{zuk}/v^2$ und deren zeitliche

Änderung $\frac{d}{dt} \cdot \rho_{zul}$ und andererseits für die Fahrgeschwindigkeit $v_{zul} = \sqrt{\dfrac{a_{zul}}{\rho}}$ und deren zeitliche Änderung $\frac{d}{dt} \cdot v_{zul}$.

Es gilt:

$$\frac{d}{dt}v = \frac{1}{2 \cdot \sqrt{\dfrac{a}{\rho}}} \cdot \frac{d}{dt}a$$

für die zulässige Änderung der Fahrgeschwindigkeit in Bezug auf die Querrichtung.

Der Toleranzbereich für die zulässige zeitliche Änderung der Fahrgeschwindigkeit kann begrenzt sein aufgrund der zulässigen Beschleunigung in Längsrichtung, also in Fahrtrichtung des Staplers 1 oder aufgrund der zulässigen Beschleunigung in Querrichtung, soweit der Stapler 1 eine Kurve fährt. Entscheidend ist hierbei, welcher Zulässigkeitswert für welche der Größen $\rho$ oder $v$ früher erreicht ist. Für eine Toleranzobergrenze für die zeitliche Änderung der Bahnkrümmung gilt:

$$\left| \frac{d}{dt}\rho \right| \leq \left| \rho_{zul} \cdot \omega \cdot \cos\left( \arcsin\left( \frac{\rho}{\rho_{zul}} \right) \right) \right|$$

oder

$$\frac{d}{dt}\rho = \frac{\dfrac{d}{dt}a}{v^2}.$$

Die Toleranzgrenze $\rho_{zul}$ für die Bahnkrümmung ist eine Funktion der Fahrgeschwindigkeit, der Nutzlast $G_L$ und der Hubhöhe H. Die Toleranzgrenze für die zeitliche Änderung der Bahnkrümmung ist eine Funktion der Fahrgeschwindigkeit, der Nutzlast, der Hubhöhe, der Eigenkreisfrequenz und der momentanen Bahnkrümmung. Die Toleranzgrenze $v_{zul}$ für die Fahrgeschwindigkeit ist eine Funktion der Nutzlast, der Hubhöhe und der momentanen Bahnkrümmung. Die Toleranzgrenze für die zeitliche Änderung der Fahrgeschwindigkeit ist eine Funktion einerseits der Nutzlast und der Hubhöhe, was die Beschleunigung längs der Fahrtrichtung angeht und andererseits eine Funktion der momentanen Geschwindigkeit und der Bahnkrümmung, was die Beschleunigung quer zur Fahrtrichtung angeht.

Zudem kann die Toleranzbereichsberechnungseinheit 17 auch einen zulässigen Toleranzbereich für die zulässige Zentrifugalbeschleunigung, also den Lenkzustand $a_{zul}$, und/oder deren zulässige zeitliche Änderung $da_{zul}/dt$ berechnen. Für die zulässige zeitliche Änderung $da_{zul}/dt$ gilt als Obergrenze:

$$\left| \frac{d}{dt}a \right| \leq \left| a_{zul} \cdot \omega \cdot \cos\left( \arcsin\left( \frac{a}{a_{zul}} \right) \right) \right|.$$

Zudem kann die Toleranzberechnungseinheit 17 einen Toleranzbereich für den zulässigen Lenkwinkel $\alpha_{zul}$ sowie dessen zulässige zeitliche Änderung $d\alpha_{zul}/dt$ berechnet. Die mit der Toleranzberechnungseinheit 17 berechneten zulässigen Werte werden an die Überwachungseinheit 31 übermittelt. Für ein sicheres und stabiles Fahrverhalten werden die aktuellen Ist-Werte des Lenkzustandes ermittelt, hieraus die Zentrifugalbeschleunigung $a_{ist}$ und/oder deren zeitlicher Änderung $da_{ist}/dt$ berechnet und an die Überwachungseinheit 31 übermittelt und von dieser überwacht. Weiterhin wird von einem Lenkrad 33 des Staplers 1 durch Betätigung durch den Fahrer ein Soll-Lenkwinkel $\alpha_{Soll}$ sowie dessen zeitliche Änderung $d\alpha_{Soll}/dt$ als Soll-Werte für einen einzustellenden Lenkwinkel $\alpha$ vorgegeben. Durch Betätigen eines Gaspedals 34 gibt der Fahrer weiterhin Soll-Werte für die Fahrgeschwindigkeit $v_{Soll}$ sowie deren zeitliche Änderung $dv_{Soll}/dt$ vor. Aus den Soll-Geschwindigkeitswerten $v_{Soll}$ und $dv_{Soll}/dt$ und den Soll-Werten für die aus dem Lenkwinkel $\alpha$ berechneten

Bahnkrümmung ρ werden Soll-Werte für den Lenkzustand $a_{Soll}$ und dessen zeitliche Änderung $da_{Soll}/dt$ berechnet und zur Überwachung an die Überwachungseinheit 31 übermittelt. Die Steuereinheit 32 stellt sicher, dass sich die überwachten Werte $a_{ist}$, $da_{ist}/dt$, $a_{Soll}$ und $da_{Soll}/dt$ innerhalb des berechneten, zusätzlichen Toleranzbereichs befinden.

Für den Fall, dass infolge einer Lenkbewegung die überwachten Werte an die Grenzen des zulässigen Toleranzbereichs stoßen, erfolgt eine aktive Regelung mit der Steuereinheit 32 derart, dass ein Überschreiten der zulässigen Werte für die Zentrifugalbeschleunigung $a_{zul}$ und/oder deren zeitliche Änderung $da_{zul}/dt$ verhindert wird. Zu diesem Zweck ist Steuereinheit 32 sowohl mit dem Lenkrad 33 als auch mit dem Gaspedal 34 in Signalverbindung, so dass eine Betätigung derselben bei Erreichen der berechneten, zulässigen Werte $a_{Soll}$, $da_{Soll}/dt$, $v_{Soll}$ und/oder $dv_{Soll}/dt$ begrenzt ist. Dadurch werden schwingungserzeugende Bewegungen vermieden und somit die Fahrsicherheit des Staplers 1 erhöht, d.h. die Kippgefahr entsprechend reduziert.

Eine Zeitachse der Sinusfunktionen gemäß den Fig. 3 und 4 läuft mit. Solange das Flurförderzeug 1 mit konstanter Geschwindigkeit v auf einer Bahn mit konstantem Bahnradius ρ fährt, wirkt auf ihn die Zentrifugalbeschleunigung $a_{ist}$, solange das Flurförderzeug 1 diesen Radius und diese Geschwindigkeit beibehält. Für diesen stationären Zustand gilt, solange das Flurförderzeug 1 in diesem quasi stationären Fahrzustand bleibt, ein einziger Punkt auf den Sinusfunktionen gemäß den Fig. 3 und 4. Die Zeitachse nach den Fig. 3 und 4 ist also nicht die reale Zeitachse, sondern entspricht der Entwicklung des Arguments der Sinus- bzw. Kosinusfunktion und wird weiterhin als Parameter verwendet. Die Zentrifugalbeschleunigung a(t) kann für das gezeigte Ausführungsbeispiel gemäß Fig. 3 als Sinusfunktion ders Parameters t abgebildet werden, wobei der Parameter dieser Sinusfunktion ω und $a_{max}$ von $G_L$, H, v und ρ abhängt. In diesem Fall wird der zulässige Wert der zeitlichen Änderung der Zentrifugalbeschleunigung $da_{zul}/dt$ aus der ersten Ableitung nach der Zeit t der Zentrifugalbeschleunigung a folgendermaßen ermittelt: Die erste Ableitung nach der Zeit da(t)/dt der Zentrifugalbeschleunigung a(t) ist in Fig. 4 dargestellt. Die dargestellte Funktion entspricht einer harmonischen Kosinusfunktion ohne Phasenverschiebung. Die Sinusfunktion a(t) hat die Eigenkreisfrequenz ω und einer maximalen Amplitude $a_{max}$. Entsprechend weist die Kosinusfunktion da(t)/dt die Eigenkreisfrequenz ω und eine maximale Amplitude $da_{max}/dt = \omega \cdot a_{max}$ auf. Der zulässige Wert der zeitlichen Ableitung der Zentrifugalbeschleunigung $da_{zul}/dt$ wird derart ermittelt, dass innerhalb des ersten Viertels der Periode der Funktion der Zentrifugalbeschleunigung a(t) derjenige Zeitpunkt $t_0$ ermittelt wird, an welchem die Funktion der Zentrifugalbeschleunigung a(t) einen aktuellen Ist-Wert $a_{ist}$ der Zentrifugalbeschleunigung annimmt. Zu diesem Zeitpunkt $t_0$ wird entsprechend der in Fig. 4 dargestellten Ableitungsfunktion der Zentrifugalbeschleunigung der maximal zulässige Wert $da_{zul}/dt$ direkt bestimmt.

Für eine Bewegung in der x-z-Ebene gilt nachfolgende Erläuterung entsprechend, wobei anstelle des Lenkzustands a und dessen zeitlicher Änderung die Fahrgeschwindigkeit v und deren zeitliche Änderung als überwachte Kenngröße verwendet werden.

Durch die Verwendung des Modells des Einmassenschwingers und der oben beschriebenen Berechnung der maximal zulässigen zeitlichen Änderung der Zentrifugalbeschleunigung $da_{zul}/dt$ erfolgen die Überwachung des zulässigen Toleranzbereichs und insbesondere das Sicherstellen, dass die überwachten Kennwerte den zulässigen Toleranzbereich nicht verlassen, in Echtzeit. Dadurch, dass ein Begrenzungsparameter wie beispielsweise $da_{zul}/dt$ aus einem funktionellen Zusammenhang ermittelt wird, ist dessen Bestimmung schnell, direkt und exakt.

Der berechnete, zulässige Toleranzbereich kann in der Überwachungseinheit 31 neben der oben beschriebenen funktionalen Abhängigkeit auch in Tabellenform für zahlreiche, gegebenenfalls Standard-Fahrgeschwindigkeiten v und Lastzustände a sowie deren zeitliche Änderungen hinterlegt sein. Es ist auch möglich, die Toleranzbereichsberechnungseinheit 17 mit einer verdrahteten und insbesondere kabellosen Schnittstelle derart auszustatten, dass eine Aktualisierung des zulässigen Toleranzbereichs nachträglich erleichtert ist, falls beispielsweise neuartige Lenkzustände a oder Fahrgeschwindigkeiten v als relevant erachtet und demnach hinterlegt werden sollen.

Beispielsweise wird der zulässige Lenkzustand $a_{zul}$ umso kleiner sein, je größer die Bezugsmasse $m_B$ und je kleiner der Lastzustand ω sind. Der Lastzustand ω ist umso kleiner, je größer das Gewicht $G_L$ und die Hubhöhe H des Containers 2 sind, d. h. je höher der Gesamtschwerpunkt $S_{ges}$ des Portalstaplers 1 in Folge der Aufnahme des Containers 2 angeordnet ist. Da der zulässige Lenkzustand $a_{zul}$ für einen bestimmten Lastzustand $\omega = f(G_L, H)$ konstant ist und sich aus dem Produkt des Quadrats einer zulässigen Fahrgeschwindigkeit v und einer zulässigen Krümmung ρ ergibt, die proportional zum Lenkwinkel α sein kann, wird der zulässige Lenkwinkel $\alpha_{zul}$ umso kleiner sein, je größer die Fahrgeschwindigkeit ist. Entsprechendes gilt für die zulässige Änderung des Lenkwinkels pro Zeiteinheit $d\alpha_{zul}/dt$. Analog sind die zulässigen Werte für Lenkzustand $a_{zul}$, und dessen zeitliche Änderung $da_{zul}/dt$ größer, falls die Bezugsmasse $m_B$ klein und der Lastzustand ω groß sind.

Zur Regelung des Fahrverhaltens des Portalstaplers ist es vorteilhaft, wenn die das Fahrverhalten charakterisierenden Ist-Werte wie beispielsweise die Ist-Zentrifugalbeschleunigung $a_{ist}$ und/oder deren zeitliche Änderung $da_{ist}/dt$ sowie die Ist-Fahrgeschwindigkeit $v_{ist}$ und deren zeitliche Änderung $dv_{ist}/dt$, die Ist-Bahnkrümmung $\rho_{ist}$ und/oder deren zeitliche Änderung $d\rho_{ist}/dt$ sowie der Ist-Lenkwinkel $\alpha_{ist}$ und dessen zeitliche Änderung $d\alpha_{ist}/dt$ in regelmäßigen Zeitabständen und insbesondere kontinuierlich erfasst und zum Abgleich mit dem zulässigen Toleranzbereich an die Toleranzbereichsberechnungseinheit 17 übermittelt wird. Solange die Ist-Werte sich innerhalb des zulässigen Toleranzbereichs befinden, erfolgt keine aktive Anpassung des Fahrverhaltens durch die Steuereinheit 32.

Die verschiedenen, vorstehend erläuterten Datenverarbeitungseinheiten sind als digitale Datenverarbeitungseinheiten ausgeführt.

**Patentansprüche**

1. Verfahren zur Regelung eines Fahrverhaltens eines Flurförderzeugs, insbesondere eines Portalstaplers oder einer anderen mobilen Arbeitsmaschine mit einem ungünstigen Verhältnis von Schwerpunktlage und Spurweite, durch Vermeidung von Schwingungen des Flurförderzeugs, umfassend die Verfahrensschritte

   a. Ermitteln einer Fahrgeschwindigkeit ($v_{ist}$) des Flurförderzeugs (1) mit mindestens einem Fahrgeschwindigkeitssensor (13),
   b. Ermitteln einer Bahnkrümmung ($\rho_{ist}$) einer Bahn, entlang der das Flurförderzeug (1) fährt, mit mindestens einem Bahnkrümmungssensor,
   c. Ermitteln eines Gewichts ($G_L$) einer von dem Flurförderzeug (1) angehobenen Last (2) mit mindestens einem Gewichtssensor (15),
   d. Ermitteln einer Hubhöhe (H) der Last (2) mit mindestens einem Hubhöhensensor (16),
   e. Berechnen eines Lastzustands ($\omega$) des Flurförderzeugs (1) in Abhängigkeit des Gewichts ($G_L$) und der Hubhöhe (H) mit einer Lastzustandsberechnungseinheit (29),
   f. Ermitteln einer Bezugsmasse ($m_B$) des Flurförderzeugs (1) in Abhängigkeit des Gewichts ($G_L$),
   g. Berechnen eines zulässigen Toleranzbereichs für die Bahnkrümmung ($\rho_{zul}$) = f ($v_{ist}$, $G_L$, H) und/oder deren zeitliche Änderung ($d\rho_{zul}/dt$ = f ($v_{ist}$, $G_L$, H, $\omega$, $\rho_{ist}$)) sowie für die Fahrgeschwindigkeit ($v_{zul}$ = f ($G_L$, H, $\rho_{ist}$)) und/oder deren zeitliche Änderung ($dv_{zul}/dt$ = f ($G_L$, H, $v_{ist}$, $\rho_{ist}$)) in Abhängigkeit von den ermittelten Größen mit einer Toleranzbereichsberechnungseinheit (17),
   h. Überwachen der Bahnkrümmung ($\rho_{ist}$) und/oder deren zeitlicher Änderung $d\rho_{zul}/dt$ sowie der Fahrgeschwindigkeit ($v_{ist}$) und/oder deren zeitlicher Änderung ($dv_{ist}/dt$) mit einer Überwachungseinheit (31) und
   i. Sicherstellen mit einer Steuereinheit (32), dass die Bahnkrümmung ($\rho_{zul}$) und/oder deren zeitliche Änderung $d\rho_{zul}/dt$ sowie die Fahrgeschwindigkeit ($v_{ist}$) und/oder deren zeitliche Änderung $d\rho_{zul}/dt$ sich innerhalb ihrer zulässigen Toleranzbereiche befinden.

2. Verfahren nach Anspruch 1, **gekennzeichnet durch** das Ermitteln der Bahnkrümmung ($\rho_{ist}$) in Abhängigkeit eines mit mindestens einem Lenkwinkelsensor (14) ermittelten Lenkwinkels ($\alpha_{ist}$).

3. Verfahren nach einem der vorstehenden Ansprüche, **gekennzeichnet durch** eine Berücksichtigung der Kennwerte Einfederung mindestens eines Rades (4) des Staplers (1), Fahrbeschleunigung, Neigungswinkel des Staplers (1) gegenüber einem Boden (6) und/oder Antriebskraft eines Rades (4).

4. Verfahren nach einem der vorstehenden Ansprüche, **dadurch gekennzeichnet, dass** zum Berechnen der zulässigen Toleranzbereiche eine Modellierung des Flurförderzeugs (1) als Einmasseschwinger mit der Bezugsmasse ($m_B$) und einer den Lastzustand charakterisierenden Eigenkreisfrequenz ($\omega$) erfolgt.

5. Verfahren nach Anspruch 4, **dadurch gekennzeichnet, dass** der Momentanwert der Bahnkrümmung oder eines von dieser und der Fahrgeschwindigkeit abhängenden Lenkzustandes der Momentanwert des Ausschlages einer harmonischen Schwingung in Abhängigkeit der Zeit (t) ist, insbesondere einer symmetrischen Sinusfunktion der Zeit (t) ohne Phasenverschiebung mit der Eigenkreisfrequenz ($\omega$) und einem Amplitudenwert ($a_{max}$).

6. Verfahren nach Anspruch 5, **dadurch gekennzeichnet, dass** der als obere Schranke für den zulässigen Toleranzbereich zulässige Wert für die zeitliche Änderung des Lenkzustandes ($da_{zul}/dt$) verwendet wird, der dem Wert der ersten Ableitung nach der Zeit (t) der periodischen Lenkzustandsfunktion (a(t)), insbesondere in einem Zeitintervall von 0 bis einem Viertel einer Schwingungsdauer (T), an der Stelle entspricht, an der die Lenkzustandsfunktion (a(t)) gleich einem aktuellen Ist-Lenkzustand ($a_{ist}$) des Flurförderzeugs (1) ist.

7. System zur Regelung des Fahrverhaltens eines Flurförderzeugs, insbesondere eines Portalstaplers oder einer anderen mobilen Arbeitsmaschine mit einem ungünstigen Verhältnis von Schwerpunktlage und Spurweite, durch Vermeidung von Schwingungen des Flurförderzeugs" umfassend

   a. mindestens einen Fahrgeschwindigkeitssensor (13) zum Ermitteln einer Fahrgeschwindigkeit ($v_{ist}$) des Flurförderzeugs (1),
   b. mindestens einen Gewichtssensor (15) zum Ermitteln eines Gewichts ($G_L$) einer von dem Flurförderzeug (1) zu hebenden Last (2),
   c. mindestens einen Hubhöhensensor (16) zum Ermitteln einer Hubhöhe (H) der Last (2),
   d. mindestens einen Bahnkrümmungssensor zum Ermitteln einer Bahnkrümmung ($\rho_{ist}$), ent-

lang der sich das Flurförderzeug (1) bewegt,

e. eine Lastzustandsberechnungseinheit (29) zum Berechnen eines Lastzustands ($\omega$) des Flurförderzeugs (1) in Abhängigkeit des Gewichts ($G_L$) und der Hubhöhe (H),

f. eine Toleranzberechnungseinheit (17) zum Berechnen eines zulässigen Toleranzbereichs für die Bahnkrümmung ($\rho_{zul}$) und/oder deren zeitliche Änderung $d\rho_{zul}/dt$ sowie für die Fahrgeschwindigkeit $v_{zu-l}$ und/oder deren zeitliche Änderung $dv_{zul}/dt$ in Abhängigkeit von den ermittelten Größen,

g. eine Überwachungseinheit (31) zum Überwachen der Bahnkrümmung ($\rho_{ist}$) und/oder deren zeitlicher Änderung $d\rho_{zul}/dt$ sowie der Fahrgeschwindigkeit ($v_{ist}$) und/oder deren zeitlichen Änderung ($dv_{ist}/dt$) und

h. eine Steuereinheit (32) zum Sicherstellen, dass der zulässige Toleranzbereich eingehalten wird,

wobei

i. der mindestens eine Gewichtssensor (15) und der mindestens eine Hubhöhensensor (16) mit der Lastzustandsberechnungseinheit (29) zum Übermitteln der ermittelten Kennwerte ($G_L$, H) als Eingangsdaten für die Lastzustandsberechnung in Signalverbindung (18) stehen,

j. die Lastzustandsberechnungseinheit (29) zum Übermitteln des Lastzustandes ($\omega$) zum Berechnen des zulässigen Toleranzbereichs mit der Toleranzberechnungseinheit (17) in Signalverbindung steht,

k. die Toleranzberechnungseinheit (17) zum Übermitteln des berechneten zulässigen Toleranzbereichs als Eingangsdatensatz für die Überwachung mit der Überwachungseinheit (31) in Signalverbindung steht und

l. die Überwachungseinheit (31) zum Sicherstellen des Einhaltens des zulässigen Toleranzbereichs mit der Steuereinheit (32) in Signalverbindung steht.

8. System nach Anspruch 7, **gekennzeichnet durch** eine mit dem mindestens einen Gewichtssensor (15) in Signalverbindung stehende Massenberechnungseinheit (27) zum Berechnen der Bezugsmasse ($m_B$) des Flurförderzeugs (1) unter Berücksichtigung des Gewichts ($G_L$).

9. System nach Anspruch 8, **dadurch gekennzeichnet, dass** die Massenberechnungseinheit (27) in die Lastzustandsberechnungseinheit (29) integriert ist.

10. System nach einem der Ansprüche 7 bis 9, **dadurch gekennzeichnet, dass** die Steuereinheit (32) einen PID-Regler aufweist.

Fig. 1

Fig. 2

Fig. 3

Fig. 4

EP 2 409 887 A2

Fig. 5

**EP 2 409 887 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2002051680 A1